# EUROPEAN PATENT APPLICATION

(11) **EP 2 138 736 A2**
(43) Date of publication of application: **30.12.2009**
(21) Application number: 09008275.1
(22) Date of filing: 24.06.2009
(51) Int. Cl.: F16D 41/06

(54) **Torque-transferring device for starting engines**

(30) Priority: 07.07.2008 JP 2008177092; 25.06.2008 JP 2008165413; 24.07.2008 JP 2008190851
(71) Applicant: Denso Corporation, Kariya-city, Aichi 448-8661 (JP)
(72) Inventor: Okada, Taro, Kariya-city, Aichi-pref., 448-8661 (JP); Saitoh, Mikio, Kariya-city, Aichi-pref., 448-8661 (JP)
(74) Representative: Kuhnen & Wacker

(57) **Abstract**

A clutch outer part 8b of a clutch 8 has an outer fixing part 80 extending from an end in an axial direction to a perimeter side in a radial direction, and the outer fixing part 80 is fixed to a torque transmitting member 12 by tightening a bolt 14. Between the outer fixing part 80 and the torque transmitting member 1.2, a static seal member 15 (for example, paper, a rubber sheet, a metallic gasket, etc.) is provided. The static seal member i.5 is arranged across entire matching surfaces of the outer fixing part 80 and the torque transmitting member 12 that are facing each other in their axial directions, and is compressed in Its axial direction by the tightening force of the bolt 14 so that the matching surfaces of the outer fixing part 80 and the torque transmitting member 12 are sealed.

## Description

### BACKGROUND OF THE INVENTION

### Technical field of the Invention

This Invention relates to a torque-transferring device for starting engines that has a clutch in a ring gear of an engine, and starts the engine by transmitting a starter's drive torque to a crankshaft of the engine from the ring gear via the clutch.

### DESCRIPTION OF THE RELATED ART

In recent years, an idling stop system that stops an engine automatically when stopping at a crossing due to a signal has been put in practical use as a measure against a car exhaust gases of that are one of the causes of global warming. As conventional technology adopted as the system mentioned above, there is disclosed a starting device for an internal-combustion engine in Japanese Patent Application Laid-Open Publication No.2008-82186, for example.

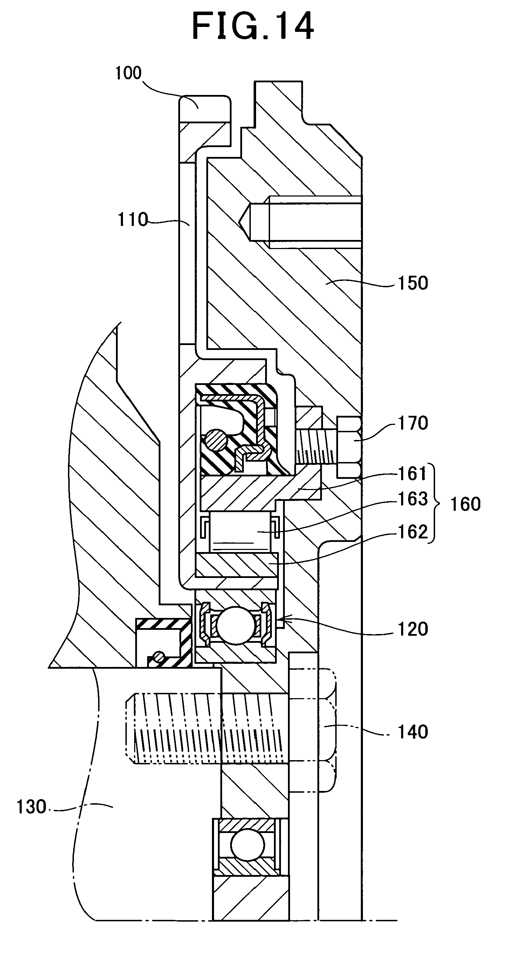

As shown in Fig. 14, this starting device comprises a 1st rotating body 110 having a ring gear 100 formed in its perimeter, a 2nd rotating body 150 (for example, flywheel) attached relatively rotatable to the 1st rotating body 110 via a bearing 120 and fixed to a crankshaft 130 of an engine with a bolt 140, a one-way clutch 160 arranged between the 1st rotating body 110 and the 2nd rotating body 150, etc. A starter's pinion gear (not shown) is meshed permanently to the ring gear 100.

At the time of starting the engine, drive torque of the starter is transmitted to the ring gear 100 from the pinion gear so that the 1st rotating body 110 having the ring gear 100 rotates, thus the rotation of the 1st rotating body 110 is transmitted to the 2nd rotating body 150 via the clutch 160 that cranks the engine.

If the rotating speed of the 2nd rotating body 150 exceeds the rotating speed of the 1st rotating body 110 by starting the engine, the clutch 160 will idle, and the torque transferring to the 1st rotating body 110 from the 2nd rotating body 150 is intercepted.

Compared with an electromagnetic pushing type starting device that pushes out a pinion gear so that the pinion gear engages to a ring gear at the time of starting an engine, the constant-mesh type starting device mentioned above is effective in the ability to reduce the wear and noise that are generated at the engagement portion of the pinion gear and the ring gear.

However, with the conventional technology disclosed in above-mentioned JP2008-82186, the clutch outer part 161 of the one-way clutch 160 is a separated part from the 2nd rotating body 150, and since the clutch outer part 161 is fixed to the 2nd rotating body 150 with a bolt 170, there is a possibility that the following problems may arise.

That is, although it is satisfactory, since very excessive centrifugal force is applied to the lubricant used for the one-way clutch 160 at the time of the engine operation, so that if sufficient sealing between the 2nd rotating body 150 and the clutch outer part 161 is not secured, it is possible that lubricant could leak from the contacting surfaces of the 2nd rotating body 150 and the clutch outer part 161.

The consequences expected from lubricant leakage include difficulties of maintaining the performance, because of the insufficient lubrication of the one-way clutch 160 that leads to an unusual wear of the clutch inner part 162 and the engagement member 163, and increased torque loss.

### SUMMARY OF THE INVENTION

The present invention has been made in light of the problem explained above, and has as its object to provide a torque-transferring device for starting engines that can prevent leakage of lubricant used for a one-way clutch from a matching surface of a 2nd rotating body and a clutch outer part of the clutch.

In the torque-transferring device for starting engines according to a first aspect, the torque-transferring device for starting engines comprises a 1st rotating body having a ring gear formed In the perimeter, a 2nd rotating body attached relatively rotatable to the 1st rotating body via a bearing and fixed to the crankshaft, and a one-way clutch that transmits torque to the 2nd rotating body from the 1st rotating body when the ring gear is driven by the starter and the 1st rotating body rotates.

The one-way clutch comprises a clutch inner part constituted by the ring gear integrally, a clutch outer part provided separately from the 2nd rotating body and fixed to the 2nd rotating body by a fixing means, and an engagement member for intermitting and transferring torque between the clutch Inner part and the clutch outer part.

There is provided a lubricant leakage suppression means for suppressing a lubricant used for the one-way clutch leaking from matching surfaces of the clutch outer part and the 2nd rotating body.

According to the present invention, leakage of lubricant used for the one-way clutch from the matching surface of the 2nd rotating body and the clutch outer part of the clutch can be prevented by the lubricant leakage suppression means.

Thereby, the performance of the clutch is maintainable, since unusual wear of the clutch Inner part and engagement member of a clutch, and the increase In loss torque can be suppressed.

In the torque-transferring device for starting engines according to a second aspect, the lubricant leakage suppression means Is arranged on the matching surfaces of the clutch outer part and the 2nd rotating body, and is arranged at least on a smallest diameter part among the matching surfaces.

In the torque-transferring device for starting engines according to a third aspect, the clutch outer part and the 2nd rotating body have the matching surfaces facing each other in a radial direction, and the lubricant leakage suppression means is arranged on the matching surfaces in the radial direction.

In the torque-transferring device for starting engines according to a fourth aspect, the lubricant leakage suppression means is a liquid gasket applied to the matching surfaces of the clutch outer part and the 2nd rotating body.

In the torque-transferring device for starting engines according to a fifth aspect, radially matching surfaces of the clutch outer part and the 2nd rotating body face each other in their radial directions, and the engagement member is arranged in a clutch compartment formed between the clutch outer part and the clutch Inner part, ends of the radially matching surfaces are directly connected to the clutch compartment, and at the same time, the diameter of the radially matching surfaces is formed smaller than an outer diameter of the clutch compartment, and a step is formed between a perimeter of the clutch compartment and the radially matching surfaces.

In the torque-transferring device for starting engines according to a sixth aspect, the matching surfaces of the clutch outer part and the 2nd rotating body that are tightly contacting In the radial directions, and the lubricant leakage suppression means is constituted by the matching surfaces that are tightly contacting in the radial directions.

### BRIEF DESCRIPTION OF THE DRAWINGS

In the accompanying drawings:
Fig. 1 shows an engine-starting device in a first embodiment;
Fig. 2 shows a sectional view of the torque-transferring device in the first embodiment;
Fig. 3 shows a sectional view of the torque-transferring device in a second embodiment (first example);
Fig. 4 shows a sectional view of the torque-transferring device in the second embodiment (second example);
Fig. 5 shows a sectional view of the torque-transferring device in a third embodiment (first example);
Fig. 6 shows a sectional view of the torque-transferring device in the third embodiment (second example);
Fig. 7 shows a sectional view of the torque-transferring device In a fourth embodiment;
Fig. 8 shows a sectional view of the torque-transferring device In a fifth embodiment;
Fig. 9 shows a sectional view of the torque-transferring device In a sixth embodiment (first example);
Fig. 10A shows a sectional view of the torque-transferring device in the sixth embodiment (second example);
Fig. 10B shows a sectional view showing a fixing method of the 1st rotating body and an outer wheel shown in figure 10A;
Fig. 11 shows a sectional view of the torque-transferring device In the sixth embodiment 6 (third example);
Fig. 12 shows a sectional view of the torque-transferring device in a seventh embodiment;
Fig. 13 shows the half-elevational view of the 1st rotating body of the torque-transferring device shown in Fig. 12; and
Fig. 14 shows a sectional view of the torque-transferring device according to a conventional technology.

### DETAILED DESCRIPTION OF THE PREFERRED EMBODIMENTS

With reference to the accompanying drawings, hereinafter are described embodiments of the present invention.

### [First Embodiment]

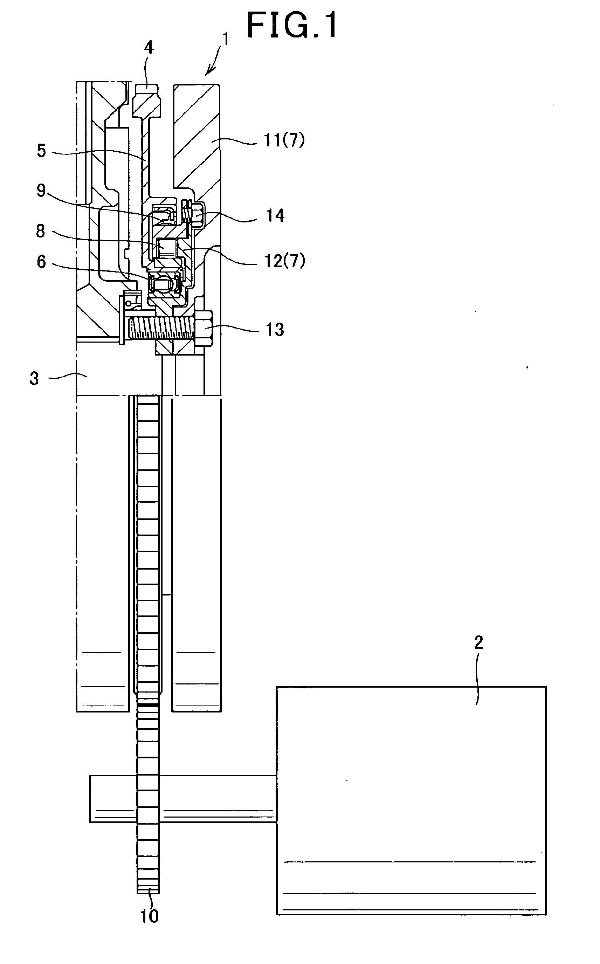

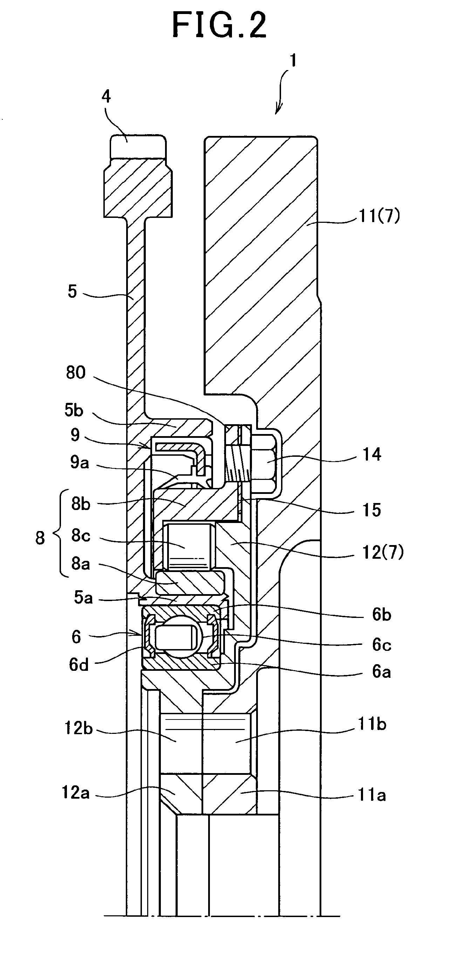

Fig. 1 is a figure of an entire engine-starting device of a first embodiment. Fig. 2 is a sectional view of a torque-transferring device for starting engines (hereafter called the torque-transferring device 1).

The torque-transferring device 1 of the present embodiment transmits the torque generated by a starter 2 to a crankshaft 3 of an engine (not shown).

As shown in Figs. 1 and 2, the torque-transferring device 1 comprises a 1st rotating body 5, a 2nd rotating body 7, a one-way clutch 8, seal member 9, and the like. The 1st rotating body 5 has a ring gear 4 formed in its perimeter and is driven by a starter 2 to rotate. The 2nd rotating body 7 is arranged near the 1st rotating body 5 in its axial direction (horizontal direction in the figure) and supported relatively rotatable to the 1st rotating body 5 via a roller bearing 6. The 2nd rotating body 7 is fixed to the crankshaft 3 of the engine at the same time. The one-way clutch 8 Is arranged between the 1st rotating body 5 and the 2nd rotating body 7. The seal member 9 prevents leakage of the lubricant (grease for example) used for the one-way clutch 8.

As shown in Fig. 1, the ring gear 4 of the 1st rotating body 5 meshes constantly to a pinion gear 10 of the starter 2, and the ring gear 4 is driven by the starter 2 to rotate.

The 2nd rotating body 7 comprises a flywheel 11 for manual-transmission vehicles (or drive plate for automatic-transmission vehicles) and torque transmitting member 12 formed separately from the flywheel 11.

As shown in Fig. 1, boss parts 11a and 12a are formed in both Inner surfaces of the flywheel 11 and the torque transmitting member 12, respectively. Penetration holes 11b and 12b are formed In the boss parts 11a and 12a, and the flywheel 11 and the torque transmitting member 12 are fixed to an end portion of the crankshaft 3 by tightening a bolt 13 that passes through the penetration holes 11b and 12b to the crankshaft 3.

As shown In Fig. 2, the roller bearing 6 is a ball bearing having a plurality of balls 6c arranged rollably between an outer wheel 6a and an inner wheel 6b. One end of the outer wheel 6a in its axial direction is fixed by pressing into the Inner circumference of the 1st rotating body 5, and the inner wheel 6b is fixed loosely to the perimeter of the boss, part 12a of the torque transmitting member 12.

Between the outer wheel 6a and the inner wheel 6b, there are provided sealing plates 6d for maintaining the seal around the balls 6c.

The roller bearing 6 is incorporated between the boss part 12a formed in the torque transmitting member 12 and a cylindrical wall part 5a provided in a inner surface of the 1st rotating body 5.

The clutch 8 comprises a clutch inner part 8a that rotates integrally with the 1st rotating body 5, a clutch outer part 8b that rotates Integrally with the 2nd rotating body 7, engagement members 8c, and the like.

The engagement members 8c may be rollers, sprags, cams, etc., and interrupt or transfer the torque between the clutch Inner part 8a and the clutch outer part 8b.

Specifically, the torque transferred to the clutch outer part 8b from the clutch inner part 8a is permitted, while the torque transferred to the clutch inner part 8a from the clutch outer part 8b is intercepted.

Lubricant (for example, grease, engine oil, etc.) is enclosed inside a clutch compartment where the engagement members 8c are arranged

The clutch Inner part 8a fits Into the perimeter of the cylindrical wall part 5a of the 1st rotating body 5, and is fixed to the cylindrical wall part 5a by means, such as caulking, for example.

The clutch outer part 8b has an outer fixing part 80 extending to the perimeter side in the direction of diameter from the end side (right end side of Fig. 2) in its axial direction, and the outer fixing part 80 is fixed to the torque transmitting member 12 by tightening a bolt 14.

Between the outer fixing part 80 and the torque transmitting member 12, a static seal member 15 that is an example of the lubricant leakage suppression means of the present invention is provided.

It should be appreciated that the static seal is the general term of the seal used for sealing a still surface without relative motion, and sheet members, such as paper, a rubber sheet, and a metallic gasket, can be used as an example of the static seal member 15.

The static seal member 15 is arranged in the whole matching surfaces where the outer fixing part 80 and the torque transmitting member 12 face each other In their axial directions (horizontal direction in Fig. 2), and is compressed in its axial direction by tightening the bolt 14 so that the matching surfaces of the outer fixing part 80 and the torque transmitting member 12 are sealed.

The seal member 9 is a well-known oil seal, for example, A projection part 5b (cylindrical wall part) projecting in its axial direction is provided on the 1st rotating body 5, and the seal member 9 is attached to an inner circumference of the projection part 5b by press fitting. Further, a lip part 9a made of rubber is in contact with the perimeter side of the clutch outer part 8b.

When relative rotation with the 1st rotating body 5 and the 2nd rotating body 7 arises, the lip part 9a slidably touches the perimeter side of the clutch outer part 8b, so that the seal member 9 seals the perimeter side of the clutch 8, and prevents leakage of lubricant.

As for the inner circumference side of the clutch 8, is sealed by the above-mentioned roller bearing 6 (ball bearing having a seal function), further, the matching surfaces of the outer fixing part 80 and the torque transmitting member 12 are sealed by the static seal member 15 that is pinched between them.

Next, the operation of the torque-transferring device 1 is explained.

### a) At the time of starting the engine.

When the ring gear 4 driven by the starter 2 rotates the 1st rotating body 5, the clutch 8 becomes in an engagement state (state where the clutch inner part 8a and the clutch outer part 8b are connected via the engagement members 8c), thus the torque is transmitted In order of the 1st rotating body 5, the clutch 8, the 2nd rotating body 7, and crankshaft 3, then the engine starts cranking.

### b) After starting the engine.

When the engine has started from the cranking, a rotation of the crankshaft 3 is transmitted to the 2nd rotating body 7, and when the revolving speed of the 2nd rotating body 7 exceeds the revolving speed of the 1st rotating body 5, the clutch 8 will be in an idling state and the torque transferred to the 1st rotating body 5 from the 2nd rotating body 7 will be intercepted. Thereby, rotation of the engine will not Input Into the starter 2.

### (Effect of the First Embodiment)

According to the torque-transferring device 1 of the present embodiment, the static seal member 15 is Inserted between the outer fixing part 80 and the torque transmitting member 12, and having the static seal member 15 compressed by the tightening of the bolt 14, the matching surfaces of the outer fixing part 80 and the torque transmitting member 12 can be sealed without a gap.

Thereby, since leakage of the lubricant from the matching surfaces of the outer fixing part 80 and the torque transmitting member 12 can be prevented, it is possible to suppress unusual wear of the clutch inner part 8a, the clutch outer part 8b and the engagement member 8c of the clutch 8 at the time of idling, and it is possible to suppress the increase in loss torque, thus the high performance of the clutch 8 can be maintained.

Moreover, since the static seal member 15 is arranged in the entire area of the matching surfaces of the outer fixing part 80 and the torque transmitting member 12 that are facing each other in their axial directions, leakage of lubricant can be suppressed in the smallest diameter part of the matching surfaces of the outer fixing part 80 and the torque transmitting member 12.

Consequently, the centrifugal force that acts on lubricant by rotation of the crankshaft 3 can be suppressed, so that the effect that suppresses leakage of lubricant improves because the pressure to the static seal member 15 by the centrifugal force becomes low.

In addition, it becomes possible to design the device that suppresses the compression applied to the static seal member 15 by the bolt 14 because the pressure applied to the static seal member 15 by centrifugal force is lowered by using the static seal member 15 whose sealing performance improves as a result of compression.

### [Second Embodiment (First Example)]

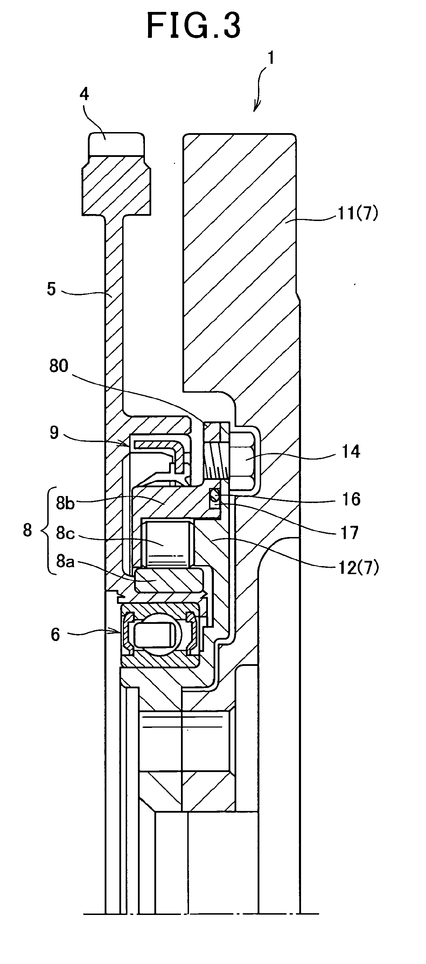

Fig. 3 is a sectional view of the torque-transferring device 1 In a second embodiment (first example). It should be appreciated that the same reference numbers are given to the same elements as the first embodiment, and explanation is omitted.

In this second embodiment (first example), an O-ring 16 (or a square ring may be sufficient), as shown in Fig. 3, is used as a lubricant leakage suppression means of the present invention.

The O-ring 16 is arranged in a ring groove 17 formed on the axial end surface of the outer fixing part 80 (in contact with the torque transmitting member 12) or on the axial end surface of the torque transmitting member 12 (in contact with the outer fixing part 80), for example. By tightening to fix the outer fixing part 80 and the torque transmitting member 12 by the bolt 14, the O-ring 16 is compressed in its axial direction, so that the matching surfaces of the outer fixing part 80 and the torque transmitting member 12 are sealed without a gap.

Thereby, leakage of the lubricant from the matching surfaces of the outer fixing part 80 and the torque transmitting member 12 can be prevented.

### [Second Embodiment (Second Example)]

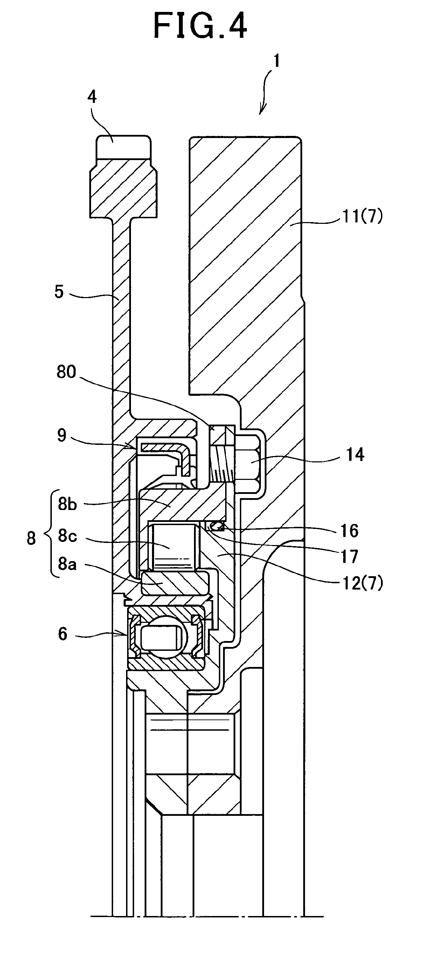

Fig. 4 is a sectional view of the torque-transferring device 1 in the second embodiment (second example). It should be appreciated that the same reference numbers are given to the same elements as the second embodiment (first example), and explanation is omitted.

It cannot be overemphasized that the O-ring 16 must be arranged between the matching surfaces of the outer fixing part 80 and the torque transmitting member 12 and radially inward from the bolt 14 respect to the rotation of the torque-transferring device 1.

In other words, as shown in Fig. 4 for example, the O-ring 16 can also be arranged in the ring groove 17 formed anywhere on the matching surfaces of the outer fixing part 80 and the torque transmitting member 12 that are facing each other in the radial direction as long as the ring grooves 17 is formed between the matching surfaces of the outer fixing part 80 and the torque transmitting member 12 and radially inward from the bolt 14 respect to the rotation of the torque-transferring device 1.

### [Third Embodiment (First Example)]

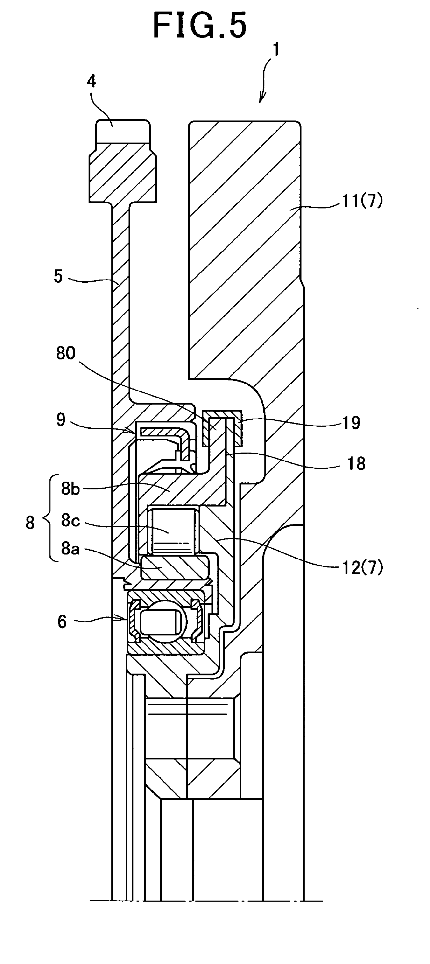

Fig. 5 is a sectional view of the torque-transferring device 1 In a third embodiment (first example). It should be appreciated that the same reference numbers are given to the same elements as the first embodiment, and explanation is omitted.

In this third embodiment (first example), a liquid gasket 18 is used as a lubricant leakage suppression means of the present Invention.

The liquid gasket 18 is applied to the entire matching surfaces of the outer fixing part 80 and the torque transmitting member 12 that are facing each other In their axial directions.

The outer fixing part 80 and the torque transmitting member 12 are fixed by a caulking means 19 (an example of a fixing means of the present invention) as shown in Fig. 5.

The liquid gasket 18 has its characteristic of getting hardened after a period of time after being applied to the matching surfaces of the outer fixing part 80 and the torque transmitting member 12

Therefore, the outer fixing part 80 and the torque transmitting member 12 are assembled after the liquid gasket 18 is applied to both the matching surfaces but before the liquid gasket 18 gets hardened, then fixed by the caulking means 19.

Since mobility of the liquid gasket 18 of the present embodiment is high at the time when applied to the matching surfaces of the outer fixing part 80 and the torque transmitting member 12 (before hardening), there will be no need to consider the roughness or uniformity of the gap of the matching surfaces when designing the seal member.

Consequently, it becomes easy to manufacture the outer fixing part 80 and the torque transmitting member 12, and it is possible to improve the productivity.

Further, as compared with a case where sheet-like gaskets (for example, a rubber sheet, a metallic gasket, etc.) are used, the downsizing of the device is attained since it is not necessary to secure the space for arranging the sheet-like gasket between the outer fixing part 80 and the torque transmitting member 12.

Furthermore, as compared with the case where the O-ring 16 is used in the above-mentioned second embodiment, the structure of the device can be simplified since it is not necessary to form the ring grooves 17 for arranging the O-ring 16.

### [Third Embodiment (Second Example)]

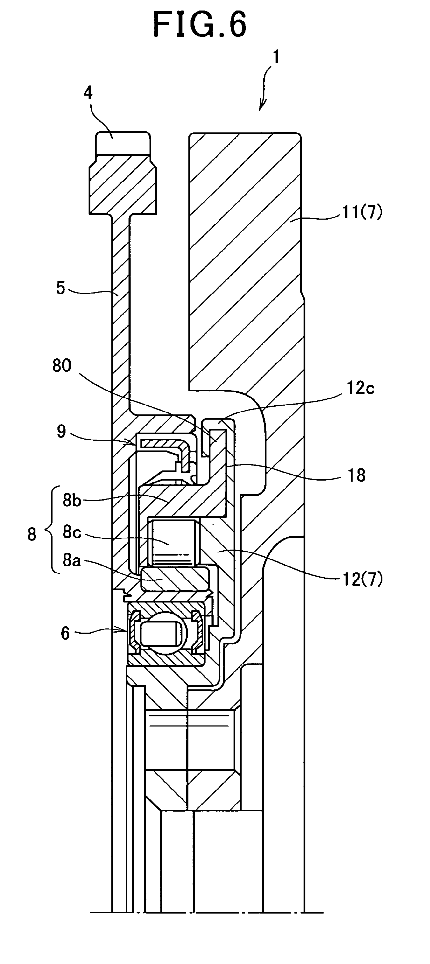

Fig. 6 is a sectional view of the torque-transferring device 1 in the third embodiment (second example). It should be appreciated that the same reference numbers are given to the same elements as the third embodiment (first example), and explanation is omitted.

Besides from the caulking means 19 shown in Fig. 5, the outer diameter part of the outer fixing part 80 may extend further outward than the outer diameter of the torque transmitting member 12 to form an extended part 12c, and the outer diameter part of the outer fixing part 80 may be wrapped by the extended part 12c and fixed by caulking, as shown in Fig. 6.

In this case, since the potential escape route of the lubricant can be made long and labyrinthine, leakage of lubricant can be suppressed more.

In addition, even when the liquid gasket 18 is used, the fixing means is not limited to the above-mentioned caulking, but fixing by using the bolt 14 mentioned in the first and second embodiments may be employed.

### [Fourth Embodiment]

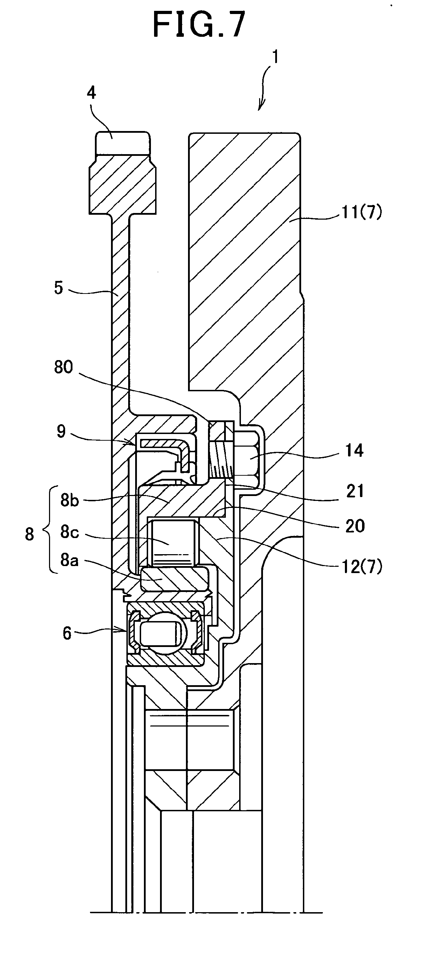

Fig. 7 Is a sectional view of the torque-transferring device 1 in the fourth embodiment. It should be appreciated that the same reference numbers are given to the same elements as the first embodiment, and explanation Is omitted.

This fourth embodiment 4 is an example of the lubricant leakage suppression means of the present invention, as shown in Fig 7, that is constituted from the matching surfaces 20 of the outer fixing part 80 and the torque transmitting member 12 that are tightly contacting in the radial directions.

For the matching surfaces 20 of the outer fixing part 80 and the torque transmitting member 12 that are tightly contacting in the radial directions, i.e., an inner circumference of the outer fixing part 80 and the perimeter of the torque transmitting member 12 that faces each other in the radial direction, a seal function can be given by smoothly (mirror) finishing the both surfaces and tightly contacting them in their radial directions.

According to the above-mentioned composition, since a relation between a direction of the centrifugal force affecting the lubricant by a rotation of the crankshaft 3 (to the top in the figure) and a direction of the matching surfaces 20 of the outer fixing part 80 and the torque transmitting member 12 (horizontal in the figure) that tightly contact in the radial direction is perpendicular, leakage of the lubricant by centrifugal force can be suppressed.

Further, since the matching surfaces 20 of the outer fixing part 80 and the torque transmitting member 12 tightly contact in the radial direction can suppress leakage of lubricant, it is not necessary to use sealing parts, such as a gasket and an O-ring, and the number of the parts can be reduces. However, forming a ring groove in the matching surfaces 20, and arranging O-ring to the ring groove can also improve sealing performance more.

Seal means (for example, a sheet-like gasket, a liquid gasket, and an O-ring etc.) can also be arranged to matching surfaces 21 of the outer fixing part 80 and the torque transmitting member 12 that are facing each other In their radial directions together with the composition of the present embodiment (composition with the outer fixing part 80 and the torque transmitting member 12 tightly contact in their radial direction, and giving a sealing function to the matching surfaces 20), causing leakage of lubricant to be suppressed much more reliably as a result.

### [Fifth Embodiment]

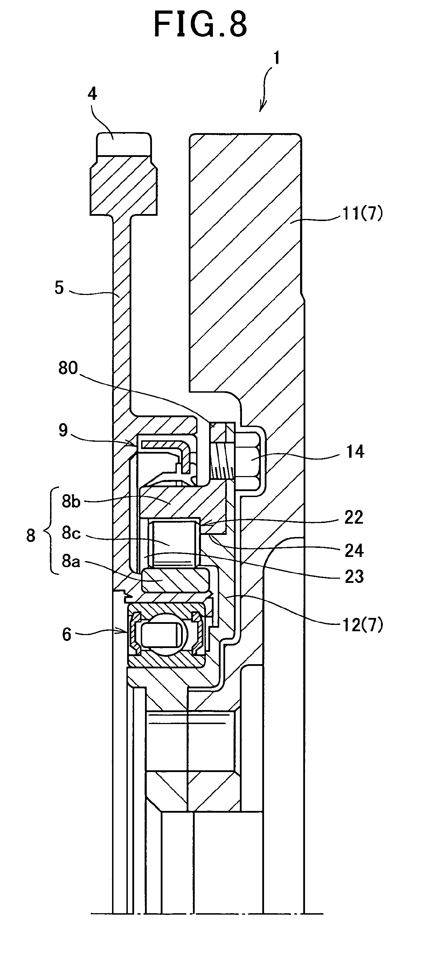

Fig. 8 Is a sectional view of the torque-transferring device 1 in a fifth embodiment. It should be appreciated that the same reference numbers are given to the same elements as the first embodiment, and explanation Is omitted.

As shown in Fig. 8, this fifth embodiment is an example that suppresses leakage of lubricant by forming a step 22 in an inner circumference of the clutch outer part 8b.

When describing a space where the engagement member 8c is arranged between the clutch outer part 8b and the clutch inner part 8a as a clutch compartment 23, the matching surfaces (i.e. radially matching surfaces 24) of the outer fixing part 80 and the torque transmitting member 12 that are facing each other in their radial directions, the ends of the radially matching surfaces 24 are directly connected to the clutch compartment 23.

At the same time, the diameter of the radially matching surfaces 24 is formed smaller than the outer diameter of the clutch compartment 23, and the step 22 is formed between the perimeter of the clutch compartment 23 and the radially matching surfaces 24.

According to the above-mentioned composition, since it is difficult for the lubricant, which receives centrifugal force by the rotation of the crankshaft 3, to leak from the radially matching surfaces 24 overcoming the step 22 provided between the perimeter side of the clutch compartment 23 and the radically matching surfaces 24, leakage of the lubricant is suppressed.

Although the above-mentioned composition (composition that suppresses leakage of lubricant with the step 22) can be used independently for the present embodiment, by using it together with any of the composition mentioned in the embodiments 1-4, leakage of lubricant can be prevented more surely.

### [Sixth Embodiment (First Example)]

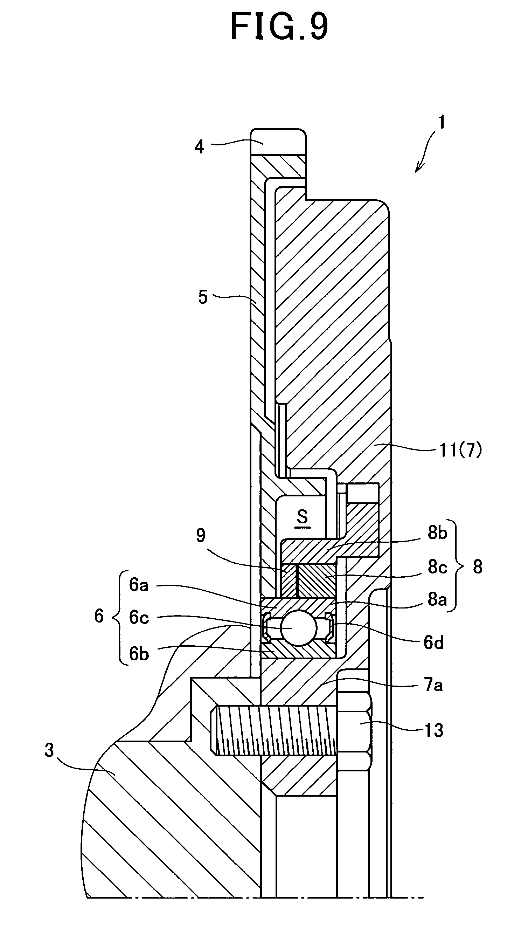

Fig. 9 is a sectional view of the torque-transferring device 1 in a sixth embodiment (first example). It should be appreciated that the same reference numbers are given to the same elements as the first embodiment, and explanation is omitted.

In the sixth embodiment (first example), the clutch 8 comprises the clutch inner part 8a that uses an outer wheel 6a of the bearing 6, the clutch outer part 8b that is arranged on the outer side in the radial direction of the clutch inner part 8a and fixed to the 2nd rotating body 7, and the engagement member 8c that interrupts and transfers the torque between the clutch outer part 8b and the clutch Inner part 8a.

The seal member 9 is arranged between the engagement member 8c and the 1st rotating body 5 in the axial direction. A perimeter end of the seal member 9 is fixed to the inner circumference of the clutch outer part 8b by press fit etc., and an inner perimeter end of the seal member 9 is slidably touching to the perimeter side of the outer wheel 6a of the roller bearing 6, thus between the clutch outer part 8b and the clutch inner part 8a is sealed air-tightly.

### (Effect of the Sixth Embodiment (First Example))

The torque-transferring device 1 of the present embodiment can acquire the following effects by used the outer wheel 6a of the roller bearing 6 for the clutch inner part 8a of the clutch 8.

As an example of the bearing 6, for example, the ball bearing under JIS standard comprises a hard material (SUJ2 etc.) that has been heat-treated from the beginning, therefore, there is no need to newly heat-treat (carburization hardening) the clutch inner part 8a if the outer wheel 6a of the ball bearing is used for the clutch inner part 8a.

On the other hand, the 1st rotating body 5 having the ring gear 4 does not need to perform carbon preventing processing (applying a carbon preventing agent process) into the portion except the ring gear 4. Therefore, high frequency hardening can be applied only to the ring gear 4 and there is no need to perform hardening in a furnace, so that the distortion accompanying the heat treatment will not occur.

Compared with a conventional style rotating body with a ring gear and a clutch inner part formed integrally, the heat treatment process can be simplified sharply. In addition, by sharing the outer wheel 6a of the bearing 6 and the clutch inner part 8a, which are separated in the conventional style device, the number of the parts can be reduced so that a sharp reduction of the cost becomes possible.

Since the torque-transferring device 1, of the present embodiment has a structure that between the clutch outer part 8b and the clutch inner part 8a Is sealed air-tightly by arranging the seal member 9 on the end side in the axial direction of the engagement member 8c, compared with a case where the seal member 9 is arranged on the perimeter of the clutch outer part 8b, the perimeter speed of the surface where the seal member 9 slidably touches can be reduced so that the durability of the seal member 9 can be improved.

Compared with the case where the seal member 9 is arranged on the perimeter of the clutch outer part 8b, the seal member 9 can be arranged much closer to the engagement member 8c. Therefore, the quantity of the lubricant (grease, for example) used for the clutch 8 can be lessened. Especially when expensive squalene is used for grease, the cost can be kept low.

An anti seal member side of the engagement member 8c is sealed by the sealing function of the roller bearing 6.

### [Sixth Embodiment (Second Example)]

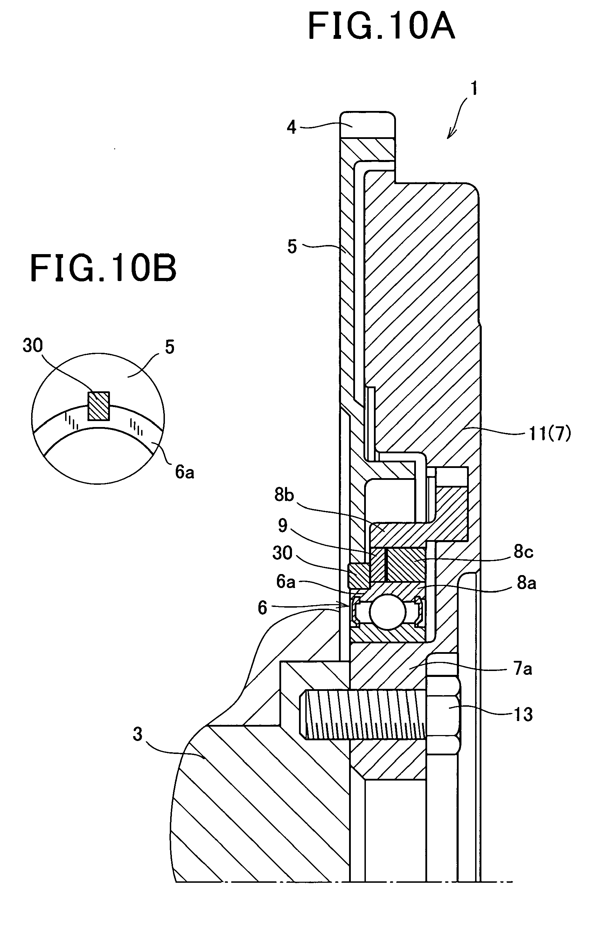

Fig. 10A is the sectional view of the torque-transferring device 1 in the sixth embodiment (second example), and Fig. 10B is the sectional view showing the fixing method of the 1st rotating body and the outer wheel shown in Fig. 10A. It should be appreciated that the same reference numbers are given to the same elements as the sixth embodiment (first example), and explanation is omitted.

Although press fitting the outer wheel 6a of the roller bearing 6 to the inner circumference of the 1st rotating body 5 is mentioned as the example in the sixth embodiment (first example), the outer wheel 6a of the roller bearing 6 is fixed to the 1st rotating body 5 relatively un-rotatable via an engagement member that engages with the end side in the axial direction of the outer wheel 6a in the sixth embodiment (second example).

As an example of the engagement member, a fixing method by using a key 30 may be considered, for example.

That is, key slots are cut in both contacting sides (the inner circumference of the 1st rotating body 5 and the perimeter side of the outer wheel 6a) where the 1st rotating body 5 and the outer wheel 6a contact, respectively, and relative rotation with the 1st rotating body 5 and the outer wheel 6a can be suppressed by inserting the key 30 in the both key slots.

### [Sixth Embodiment (Third Example)]

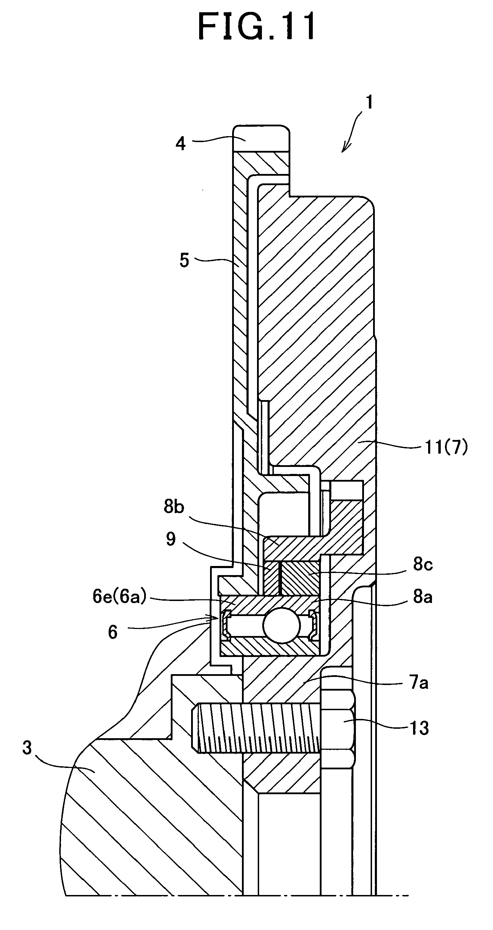

Fig. 11 is a sectional view of the torque-transferring device 1 in the sixth embodiment (third example). It should be appreciated that the same reference numbers are given to the same elements as the sixth embodiment (first example), and explanation is omitted.

Although this sixth embodiment (third example) is an example showing that the outer wheel 6a of the roller bearing 6 is press fit into the inner circumference of the 1st rotating body 5 similar to the sixth embodiment (first example), this is another example showing that the length of the portion to be press fit is made longer.

That is, as shown In Fig. 11, the end side In the axial direction of the ball bearing 6 is extended in its axial direction, and the end side in the axial direction of the outer wheel 6a including the extended part 6e is press fit into the inner circumference of the 1st rotating body 5.

The most inner diameter part of the 1st rotating body 5 is extended cylindrically in its axial direction corresponding to the extended part 6e of the roller bearing 6, and it secures the press fit length with the extended part 6e.

According to the above-mentioned composition, as compared with the case of the sixth embodiment (first example), since the length of the portion to be press fit Into can be designed to be longer, the fixing strength can be increased, and the deformation of the outer wheel 6a and distortion by press fit can be suppressed.

### (Modification)

Although the seal member 9 is arranged by the inner circumference side of the clutch outer part 8b, and near the end side in the axial direction of the engagement member 8c in the sixth embodiment (first example), a seal member (refer to the oil seal in Fig. 2 etc., for example) can also be arranged to a space S formed in the outside in the radial direction of the clutch outer part 8b, as shown in Fig. 9, for example.

### [Seventh Embodiment]

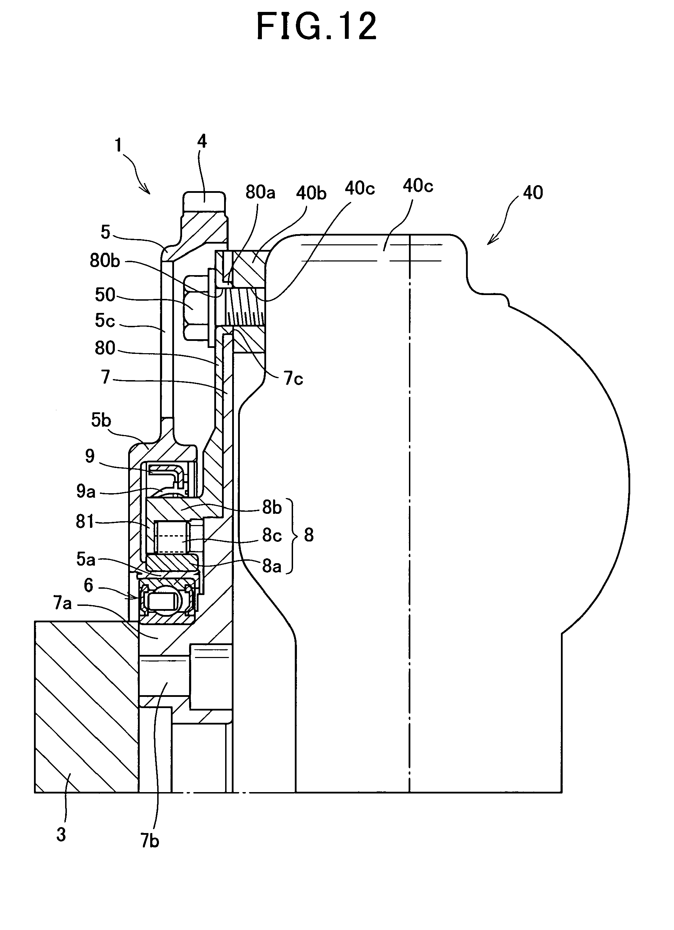

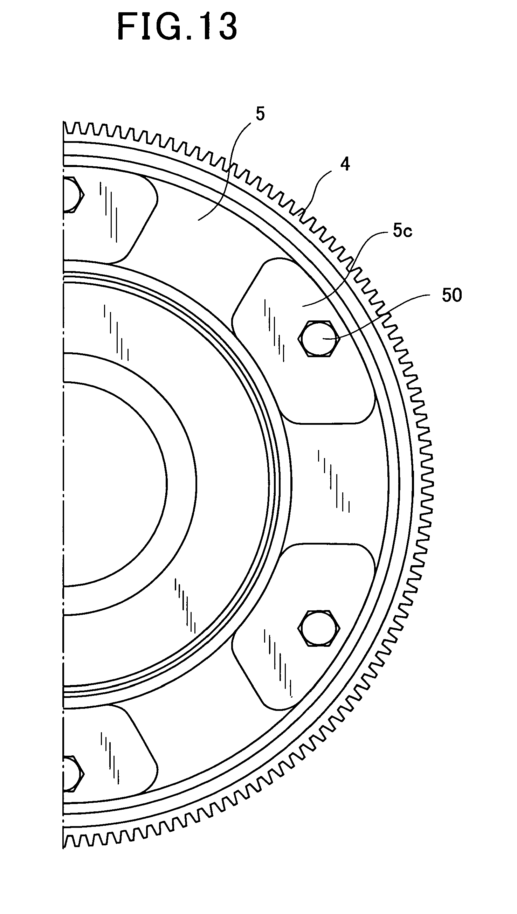

Fig. 12 is a sectional view of the torque-transferring device 1 used for the vehicles equipped with an automatic transmission in a seventh embodiment. Additionally, Fig. 13 is a half-elevational view of the 1st rotating body 5 of the torque-transferring device 1 shown in Fig. 12. It should be appreciated that the same reference numbers are given to the same elements as the first embodiment, and explanation is omitted.

The 2nd rotating body 7 of the torque-transferring device 1 In the seventh embodiment is a drive plate for automatic-transmission equipped cars. A boss part 7a is formed In the most inner diameter part of the 2nd rotating body 7, and a through hole 7b Is formed in the boss part 7a. A bolt (not shown) passes through the through hole 7b and is fixed to the end portion of the crankshaft 3 by tightening.

The clutch outer part 8b of the clutch 8 is provided separately from the 2nd rotating body 7, and is fixed to a front case 40a of a torque converter 40 used for an automatic transmission together with the 2nd rotating body 7 by using a common bolt 50.

Screw bases 40b for fixing the 2nd rotating body 7 and the clutch outer part 8b are provided in six places In the direction of a circumference with equal intervals on the front case 40a of the torque converter 40, and female screw 40c for tightening the bolt 50 is formed in each screw base 40b.

An outer fixing part 80, which is extending in the outer side of the radial direction in the shape of a plate, is formed integrally on the end side (right end side in Fig. 1) in the axial direction of the clutch outer part 8b. The outer diameter of the outer fixing part 80 is set nearly the same size as the outer diameter of the 2nd rotating body 7.

The 2nd rotating body 7 and the outer fixing part 80 are assembled together in the state that both are contacted in the axial direction (horizontal direction in the figure), and bolt holes 7c, 80b for inserting a bolt 50 are formed in the direction of the circumference at equal intervals.

However, the diameter of the bolt hole 7c formed in the 2nd rotating body 7 is several millimeters larger than the bolt hole 80b formed in the outer fixing part 80. On the other hand, the bolt hole 80b formed in the outer fixing part 80 has a diameter large enough to Insert the bolt 50 of M10 type.

In the end side of the outer fixing part 80 that contacts the 2nd rotating body 7, there is provided an annular projection part 80a around the bolt hole 80b, and this projection part 80a fits into the bolt hole 7c formed In the 2nd rotating body 7 in the state of lightly press fit. The height of the projection part 80a is recessed within the plate thickness of the 2nd rotating body 7.

As shown in Fig. 13, openings 5c to allow access by a tool (not shown) for tightening (and loosening) the bolts 50 are formed In the 1st rotating body 5. The openings 5c are formed at least for the number of bolts 50, and each opening 5c is formed corresponding to the tightening position of each bolt 50, respectively.

The torque-transferring device 1 of the present invention is supplied to an automaker where all the parts (the 1st rotating body 5, the 2nd rotating body 7, the bearing 6, the clutch 8, the sealing member 9, etc.) are assembled together.

At the automaker, after fixing the 2nd rotating body 7 to the crankshaft 2 of the engine with a bolt, the bolts 50 are inserted into the bolt holes 7c formed In the 2nd rotating body 7 and the outer fixing part 80, and the bolts 50 are screwed and fixed to the screw bases 40b provided in the front case 40a of the torque converter 40.

### (Effect of the Seventh Embodiment)

In the torque-transferring device 1 of the present embodiment, since the clutch outer part 8b of the clutch 8 and the 2nd rotating body 7 are formed separately, the 2nd rotating body 7 can be manufactured less expensively by plasticity processing, such as a pressing, molding, or other known technique.

In addition, since heat-treatment can be given only to the clutch outer part 8b that needs strength, and no heat-treating is given to the 2nd rotating body 7, no distortion accompanying heat-treatment will occur in the 2nd rotating body 7.

Further, by providing the clutch outer part 8b and the 2nd rotating body 7 separately, an outer wall part 81 that extends to the inner side (the clutch inner part 8a side) of the radial direction may be formed at one end of the clutch outer part 8b in the axial direction, that is, an opposite end (left-hand side end in Fig. 12) to the end in which the outer fixing part 80 Is formed, so that leakage of the lubricant from the clutch compartment can be suppressed by the outer wall part 81.

Since the torque-transferring device 1 of the present embodiment is sharing the bolt 50 for fixing the 2nd rotating body 7 to the front case 40a of the torque converter 40 as a means to fix the outer fixing part 80 to the 2nd rotating body 7, bolts exclusively used for fixing the clutch outer part 8b to the 2nd rotating body 7 can be abolished.

Consequently, since the number of parts (the number of bolts) can be reduced and the tightening work of the bolts 50 is also reducible, the cost can be reduced and the weight saving is also realized by reducing the number of parts.

By the way, the process of fixing the 2nd rotating body 7 and the outer fixing part 80 to the front case 40a of the torque converter 40 is an important process that connects the engine and the torque converter 40 via the 2nd rotating body 7, and is directly used in the assembly line of the main part of the vehicles.

For this reason, the increase in the workload for tightening the bolts makes the completion workload of the vehicles larger, and therefore causes a fall in productivity.

For example, in the automakers, if the position of the bolt hole 7c formed in the 2nd rotating body 7 and the position of the bolt hole 80b formed in the outer fixing part 80 have shifted in the direction of a circumference when the bolts 50 are tightened, work for matching the position to match the positions of both bolt holes 7c and 80b will be needed, and it will become a factor in reducing efficiency of assembly work.

On the other hand, in the torque-transferring device 1 of the present embodiment, there Is provided the annular projection part 80a around the bolt hole 80b, and this projection part 80a fits into the bolt hole 7c formed in the 2nd rotating body 7, thus relative rotation of the both is suppressed.

That is, the projection part 80a provided in the outer fixing part 80 is functioning as a positioning means to suppress relative rotation with the 2nd rotating body 7.

Thereby, this torque-transferring device 1 can be assembled together, where the position of the bolt hole 80b formed in the clutch outer part 8b and the position of the bolt hole 7c formed in the 2nd rotating body 7 are positioned according to the direction of a circumference.

Consequently, In the automakers, since the work for matching the position of the bolt holes can be abolished when tightening the bolts, the number of man-hours required can be reduced as compared with the case where matching bolt positions is required.

In addition, the openings 5c are formed In the 1st rotating body 5 of the present torque-transferring device 1, and since inserting and removing the tool for tightening the bolt 50 through these openings 5c becomes possible, tightening the bolt 50 In the automaker can be easily carried out.

Especially, since the openings 5c are formed at least one per each of the bolts 50, and each opening 5c is formed corresponding to the tightening position of each bolt 50, respectively, when tightening the following bolt 50 after tightening the first bolt 50, it is not needed to move the position of the openings 5c to the tightening position of the following bolt 50.

That is, when tightening a plurality of bolts 50 tight at a time in order, since it is not necessary to rotate the 1st rotating body 5 each time, the work required for tightening the bolts can be lessened.

As a result, from above, since the assembling workability in the automaker improves, the completion time of the vehicles does not get worse, and a fall in productivity can be avoided.

Moreover, noise made between the pinion gear 10 and the ring gear 4 at the time of starting the engine Is emitted by the 1st rotating body 5 that serves as a soundboard. Therefore, providing more numbers of the openings 5c and enlarging the areas of the openings 5c formed in the 1st rotating body 5, that is, when the area rate of the openings 5c that occupies the 1st rotating body 5 is large, the noise reduction effect at the time of starting the engine improves.

Especially, since the vehicles equipped with the idling stop system, which controls the stop and the re-start of the engine automatically, start the engine more frequently than usual vehicles that are not equipped with the idling stop system, therefore reduction of starting sound serves as an important effect especially when the present torque-transferring device 1 is used for the vehicles carrying an idling stop system.

### (Modification)

Although the pinion gear 10 of the starter 2 is constantly meshed with the ring gear 4 formed in the 1st rotating body 5 employed in the torque-transferring device 1 disclosed in above embodiments and examples, the present torque-transferring device 1 is applicable also to the starter that employs an electromagnetic pushing type starter having its pinion gear 10 pushed out in the axial direction and engaged to the ring gear 4 only at the time of starting the engine.

Furthermore, the roller bearing 6 used in the present invention is not limited to the ball bearing, but any bearing that uses a "roller" for the rolling element, (needle bearing, etc.), for example, are also employable.

## Claims

1. A torque-transferring device for starting engines that starts the engine by transmitting a starter's drive torque to a crankshaft of the engine comprises:
a 1st rotating body having a ring gear formed in the perimeter,
a 2nd rotating body attached relatively rotatable to the 1st rotating body via a bearing and is fixed to the crankshaft, and
a one-way clutch that transmits torque to the 2nd rotating body from the 1st rotating body when the ring gear is driven by the starter and the 1st rotating body rotates,
wherein, the one-way clutch comprises a clutch inner part constituted by the ring gear Integrally,
a clutch outer part provided separately from the 2nd rotating body and is fixed to the 2nd rotating body by a fixing means, and
an engagement member for Intermitting and transferring torque between the clutch inner part and the clutch outer part,
and there is provided a lubricant leakage suppression means for suppressing a lubricant used for the one-way clutch leaking from matching surfaces of the clutch outer part and the 2nd rotating body.

2. The torque-transferring device for starting engines according to claim 1, wherein,
the lubricant leakage suppression means is arranged on the matching surfaces of the clutch outer part and the 2nd rotating body, and is arranged at least on a smallest diameter part among the matching surfaces.

3. The torque-transferring device for starting engines according to claim 1, wherein,
the clutch outer part and the 2nd rotating body have the matching surfaces facing each other in a radial direction, and
the lubricant leakage suppression means is arranged on the matching surfaces in the radial direction.

4. The torque-transferring device for starting engines according to claim 1, wherein,
the lubricant leakage suppression means is a liquid gasket applied to the matching surfaces of the clutch outer part and the 2nd rotating body.

5. The torque-transferring device for starting engines according to claim 1, wherein,
radially matching surfaces of the clutch outer part and the 2nd rotating body face each other in their radial directions, and
the engagement member is arranged In a clutch compartment formed between the clutch outer part and the clutch inner part,
ends of the radially matching surfaces are directly connected to the clutch compartment, and
at the same time, the diameter of the radially matching surfaces is formed smaller than an outer diameter of the clutch compartment, and a step is formed between a perimeter of the clutch compartment and the radially matching surfaces.

6. The torque-transferring device for starting engines according to claim 1, wherein,
the matching surfaces of the clutch outer part and the 2nd rotating body are tightly contacting In the radial directions, and
the lubricant leakage suppression means is constituted by the matching surfaces that are tightly contacting In the radial directions.
